# EUROPEAN PATENT SPECIFICATION

(11) **EP 4 543 097 B1**
(45) Date of publication and mention of the grant of the patent: **09.09.2026**
(21) Application number: 23204697.9
(22) Date of filing: 19.10.2023
(51) Int. Cl.: H04W 52/02, H04W 48/18, H04W 88/02

(54) **COMMUNICATION DEVICE AND CORRESPONDING METHOD AND COMPUTER PROGRAM**
KOMMUNIKATIONSVORRICHTUNG UND ENTSPRECHENDES VERFAHREN UND COMPUTERPROGRAMM
DISPOSITIF DE COMMUNICATION, PROCÉDÉ CORRESPONDANT ET PROGRAMME INFORMATIQUE

(43) Date of publication of application: 23.04.2025
(73) Proprietor: Deutsche Telekom AG, 53113 Bonn (DE)
(72) Inventor: LAUSTER, Reinhard, 3100 St. Pölten (AT); COLOM IKUNO, Josep, 2100 Korneuburg (AT)
(74) Representative: 2SPL Patentanwälte PartG mbB

(56) References cited:
- WO-A1-2022/236302
- WO-A1-2023/179890
- WO-A1-2023/186334
- US-A1- 2016 219 470

## Description

### Field

Examples relate to a communication device, and to a method and computer program for a communication device, more specifically, but not exclusively, to providing a software interface for providing energy/sustainability information to software applications being executed on a communication device.

### Background

In mobile communications, AT (short for Attention) commands are used to control modems. The Third-Generation Partnership Project (3GPP) specifies in TS (Technical Specification) 23.007 various AT commands that UEs (User Equipment, such as mobile phones) are recommended to support. 3GPP TS 23.007 specifies a profile of AT commands and recommends that this profile be used for controlling Mobile Termination (MT) functions and network services from a Terminal Equipment (TE) through a Terminal Adaptor (TA).

AT commands used for digital cellular communications generally start with the prefix +C, which is reserved for Digital Cellular in ITU-T (International Telecommunication Union Telecommunication Standardization Sector) Recommendation V.250. There are various standards that define AT commands for use in digital cellular communications. The AT commands defined often assume an abstract architecture comprising the entities Mobile Termination (MT), Terminal Adaptor (TA) and Terminal Equipment (TE). These entities may be separate entities, or may be combined (e.g., the MT comprising the TA and the TE being separate, the TE comprising the TA and the MT being separate, or the TE comprising the TA and MT). In general, AT commands are used between the TE and the TA, while the information being retrieved is often related to the MT. In essence, the TA may be seen as a communication intermediary between the TE and the MT.

According to 3GPP specifications, AT commands can be mandatory, conditionally mandatory or optional. For example, as defined in 3GPP TS 23.007, AT commands may, for example, include general commands (e.g., for identification and requesting information about the capabilities of the TA), call control commands (e.g., relating to the control of calls), network service-related commands (e.g., network-related commands not related to the control of calls), mobile termination control and status commands (e.g., related to MT power, keypad, phone book and real-time clock etc.), commands for packet domain (e.g., for controlling packet switched services supported by the MT), commands for Voice Group Call Services and Voice Broadcast Services, commands for interaction with Universal Subscriber Identity Modules (USIMs), commands for enhanced support of dialing, commands for eBMMS (evolved Multimedia Broadcast Multicast Service) configuration, commands for UE test functions, commands for Vehicle-to-Anything (V2X) Application Enabler (VAE) layer configuration, commands for UAE (Unscrewed Aerial System, UAS, Application Enabler) layer configuration and commands for UAS configuration and operation.

AT commands also enable the communication with the UICC (Universal Integrated Circuit Card, i.e., the SIM, Subscriber Identity Module, card), for UICCs connected to an MT via an USIM Application Toolkit (USAT), with some functionality being provided by the MT and other functionality being provided by the TE.

In general, within the 3GPP standardization framework, it is possible to use API-based Applications on the UE for network steering. This is, for example, enabled by the CAPIF (Common Application Programming Interface Framework) Framework for authorization and SEAL (see 3GPP TS 23.434, Service Enabler Architecture Layer for Verticals (SEAL); Functional architecture and information flows) for API exposure. 3GPP SA6 (System Aspects workgroup 6) studied CAPIF (3GPP TS 23.222) enhancements to support Resource owner-aware Northbound API Access (RNAA), which enables the authorization of API in-vokers when the APIs are invoked in the context of resource owners (e.g., MNO (Mobile Network Operator) subscribers). An API invoker accesses the resources exposed by 3GPP northbound APIs and some of these resources may directly impact end user's service experience (e.g., modify QoS) or may handle end user specific information (e.g., obtain user location). An example use case of RNAA is QoS modification while consuming gaming services, where an end user (also a subscriber of the MNO in this case) is playing a game provided by a game provider and the gaming experience of the end user has to be improved. A depiction of the CAPIF architecture can be found at https://www.3gpp.org/technologies/rnaa, for example. Additionally, the 3GPP SEAL architecture can also be deployed to allow for API exposure at the UE. In this case, a SEAL client is deployed in the UE, with SEAL communication occurring over the UE's User Plane (UP).

The SEAL Architecture is described in 3GPP TS 23.433 for example. As shown in Fig. 7.2-3 of 3GPP TS 23.433, a SEALDD (SEAL Data Delivery) server may act as authorized API invoker to consume services from the Core Network (5GC, Core of the 5^{th} Generation Network, EPC, Evolved Packet Core) northbound API entities e.g., as specified in 3GPP TS 23.222. More information on the SEAL architecture can be found in 3GPP TS 23.434. According to this technical specification, the functional model for SEAL is organized into a generic SEAL service functional model and specific SEAL service functional models. For example, the following SEAL services may be supported: location management, group management, configuration management, identity management, key management, network resource management, data delivery, notification management, network slice capability enablement, and application data analytics enablement. Document US2016/219470A1 discloses a mobile communication device comprises TE, TA, MT which communicate via AT commands for obtaining power consumption information for offloading data traffic from UTRAN or EUTRAN to WLAN. Document WO2022/236302A1 discloses a mobile communication device comprises TE and MT which communicate via AT commands and obtain second AMBR value and a second set of QoS Rules for low battery level condition.

### Summary

There may be a desire for a standardized manner in which energy-related information can be retrieved from a UE.

This desire is addressed by the subject-matter of the independent claims. Further implementation details are defined in the appended dependent claims.

Various examples of the present disclosure are based on the finding, that, in order to support both on-device and network-triggered access to energy-related information (in the following also denoted energy and/or sustainability information, or energy/sustainability information), a software interface may be provided by a component of a communication interface of a communication device, such as a UE. A software application being executed on the communication device may obtain the energy/sustainability information via the software interface, and, for example, use the information to control communication parameters of the communication device, or forward the energy/sustainability information to another application, to an application server, or to an infrastructure element of a communication network. This way, the energy/sustainability information may be monitored and be used, by the UE itself, by the communication network, or by an application server, to adapt their operation, e.g., in order to improve an energy/sustainability-related behaviour of the communication device, of the communication network, or of the application server.

Some aspects of the present disclosure relate to a communication device. The communication device comprises a communication interface with a first component and a second component. The first component is configured to communicate with one or more software applications being executed on the communication device. The second component is configured to communicate within a communication network. The first component is configured to obtain energy and/or sustainability information from the second component, with the energy and/or sustainability information being related to a communication of the second component within the communication network. The first component is configured to provide a software interface for providing the energy and/or sustainability information to a software application being executed on the communication device. This way, the energy/sustainability information may be monitored and be used, by the UE itself, by the communication network, or by an application server, to adapt their operation, e.g., in order to improve an energy/sustainability-related behaviour of the communication device, of the communication network, or of the application server.

For example, the first component may be configured to communicate with the second component via a third component of the communication device. For example, the first component may communicate with or via the third component of the communication device using Attention, AT, commands or using an Application Programming Interface, API. For example, the AT commands or Application Programming Interface may include support for obtaining the energy and/or sustainability information from the second component via the third component. The AT commands or API may be standardized and be used across devices of different manufacturers and/or across different types of communication networks, which may improve their adoption across the industry, and thus enable or facilitate the use of mechanism to reduce the energy and/or carbon footprint of operating the communication device or communication network.

According to an example, the AT commands or Application Programming Interface include support for obtaining at least one of energy and/or sustainability information related to a network service provided by an operator of the communication network, energy and/or sustainability information related to an energy usage or energy measurement locally at the communication device, and energy and/or sustainability information related to a sustainability level or energy consumption of a packet-domain aggregation of communication from the second component. These types of information are particularly relevant for gaining an insight into the energy use and sustainability impact of the communication device and may be used for triggering various actions related to the energy use or sustainability impact.

For example, the first component may be configured to provide the software interface with support for providing at least one of energy and/or sustainability information related to a network service provided by an operator of the communication network, energy and/or sustainability information related to an energy usage or energy measurement locally at the communication device, and energy and/or sustainability information related to an energy consumption or sustainability level of a packet-domain aggregation of communication to the software application. For example, the software application may forward this information to another software application, to an application server or to an infrastructure element of the communication network (which may use the information triggering various actions related to the energy use or sustainability impact of the communication device of communication network), or use the information to trigger such actions directly, e.g., without going through another software application, application server or infrastructure element.

According to an example, the energy and/or sustainability information related to a network service provided by an operator of the communication network may comprise one or more of energy and/or sustainability information related to a currently attached communication network, energy and/or sustainability information related to a currently attached cell and/or used access technology of the communication network, information on a network-side energy budget being available for the communication device, information on at least one preferred energy or sustainability type criterion for cell selection, and information on an energy consumption or sustainability level for a specific service. For example, this type of information may be used to trigger actions related to a use of the communication network, cell, access technology or service by the communication device.

In various examples, the energy and/or sustainability information related to an energy usage or energy measurement locally at the communication device may comprise one or more of information on an energy class of the communication device, information on an energy usage or intensity for a given frequency band, information on an energy usage or intensity for a given access technology. Similarly, this type of information may be used to trigger actions related to a use of frequency band or access technology by the communication device, or actions related to the energy class of the communication device, for example.

According to an example, the energy and/or sustainability information related to an energy consumption and/or energy consumption or sustainability level of a packet-domain aggregation of communication may comprise one or more of information on an energy consumption for a specific Packet Data Unit session, information on an energy consumption for a specific Quality of Service, QoS, flow, information on an energy consumption for a specific slice or Data Network Name, DNN, and information on an energy consumption for a specific application. This type of information may be used to trigger actions related to a use of QoS flow, slice/DNN, or application by the communication device, for example.

In some examples, the first component may be configured to provide a request for the energy and/or sustainability information to the second component, the request comprising information on at least one of a time threshold and a value threshold, and the second component may be configured to provide the energy and/or sustainability information according to the information on at least one of the time threshold and value threshold. This way, the second component may provide or compile the desired information according to pre-defined criteria, without the first component having to poll the respective information.

For example, the communication device may comprise circuitry configured to execute the software application. The software application may be configured to obtain the energy and/or sustainability information from the first component via the software interface. The software application may, for example, provide the information to another software application, to an application server, or to an infrastructure element of the communication network, or trigger an action via the first component.

According to an example, the software application may be configured to obtain the energy and/or sustainability information from the first component via the software interface in response to a trigger. For example, the trigger may be based on one of a request by an infrastructure element of the communication network, a request by an application server, a request by another software application being executed on the communication device, and an internal logic of the software application. For example, the trigger may cause the software application to obtain (e.g., request or read out) the energy/sustainability information from the first component, such that it can be provided to the respective recipient or used to trigger an action.

In some examples, the software application may be configured to provide an Application Programming Interface, API, to obtain the request by the infrastructure element or application server on an application layer. This API may be used by the application server or infrastructure element to obtain the respective information, without the software application having to check in with the application server or infrastructure element first.

According to an example, the software application may be configured to obtain the request by the infrastructure element via a Service Enabler Architecture Layer for Verticals, SEAL, Application Programming Interface, API. This API is defined for 3GPP-based cellular communication networks and may provide a technology to implement the access to the energy/sustainability information.

In some examples, the software application may be configured to provide a message to another entity based on the energy and/or sustainability information. For example, the software application may forward the energy and/or sustainability information or trigger an action.

For example, the software application may be configured to provide the message to the first component, the message comprising a command being suitable for triggering or setting at least one of a set phone functionality, a power saving mode setting, a Public Land Mobile Network, PLMN, selection, and a power preference indication. Such commands may have an impact on the energy use or sustainability of the communication device and may be used to reduce the energy use and/or to improve the carbon footprint of using the communication device.

In some examples, the software application may be configured to provide the message to one of an infrastructure element of the communication network, an application server, and another application being executed on the communication device. This way, the infrastructure element, the application server, or the other application may use the information to trigger actions that may impact on the energy use or sustainability of the communication device or communication network, and thus reduce the energy use and/or to improve the carbon footprint of using the communication device or operating the communication network.

In some examples, the software application may be configured to provide the message to the infrastructure element of the communication network, with the message comprising a request or command to change a parameter related to a communication of the communication device within the communication network. Such commands may impact the energy use and/or sustainability of using the communication device or operating the communication network.

For example, the software application may be configured to provide the message to the infrastructure element via a Service Enabler Architecture Layer for Verticals, SEAL, Application Programming Interface, API. This API is defined for 3GPP-based cellular communication networks and may provide a technology to provide the message to the infrastructure element.

In various examples, the software application may be at least one of a Service Enabler Architecture Layer for Verticals, SEAL, application, an Universal Integrated Circuit Card application, and a software application of an operator of the communication network. SEAL applications are able to provide a SEAL API endpoint for the communication network, for example. The software application of the operator of the communication network may be programmed such, that the overall energy use of the communication network, as used by a plurality of communication devices, is reduced and/or the sustainability is improved (e.g., by improving the carbon t.

For example, the second component may be configured to determine the energy and/or sustainability information based on at least one of one or more device-side energy-related measurements, network-side energy and/or sustainability information received from an infrastructure element of the communication network, and stored energy and/or sustainability information contained in a Subscriber Identity Module, SIM, hosted by the communication device. In other words, the second component may compile the energy and/or sustainability information from various local and/or remote sources.

According to an example, the second component may be configured to receive, from the infrastructure element of the communication network, network-side energy and/or sustainability information, and to determine the energy and/or sustainability information based on the network-side energy and/or sustainability information, the network-side energy and/or sustainability information comprising at least one of energy and/or sustainability information related to a currently attached communication network, energy and/or sustainability information related to a currently attached cell of the communication network, information on a network-side energy budget being available for the communication device, information on at least one preferred energy type criterion for cell selection, and information on an energy consumption for a tracking area, cell, frequency band, frequency band combination, Packet Data Unit session, Quality of Service flow, service, or application. These types of information may be used by the second component to compile the energy and/or sustainability information.

In the previous examples, the focus has been on cellular communication networks according to a 3GPP communication standard. For example, the communication interface may be suitable for communicating in a cellular communication network. The communication interface may comprise a Terminal Equipment entity, TE, corresponding to the first component, a Mobile Termination entity, MT, corresponding to the second component, and a Terminal Application entity, TA, corresponding to a third component of the communication interface, with the TE communicating with the MT via the TA.

Some aspects of the present disclosure relate to a corresponding method for a communication device. The method comprises obtaining, by a first component of a communication interface of the communication device, energy and/or sustainability information from a second component of the communication interface. The second component is configured to communicate within a communication network. The energy and/or sustainability information is related to a communication of the second component within the communication network and providing. The method comprises providing, by the first component, a software interface for providing the energy and/or sustainability information to a software application being executed on the communication device.

An aspect of the present disclosure relates to computer program with a program code for performing the above method, when the computer program is run on a communication device comprising a communication interface with a first component and a second component.

### Brief description of the Figures

Some examples of apparatuses and/or methods will be described in the following by way of example only, and with reference to the accompanying figures, in which:
- Fig. 1a: shows a schematic diagram of an example of a communication device;
- Fig. 1b: shows a flow chart of an example of a method for a communication device;
- Fig. 2: shows a schematic diagram of a proposed architecture;
- Fig. 3: shows a flow diagram of a call flow for energy-related AT commands; and
- Fig. 4: shows a table of examples of AT commands.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

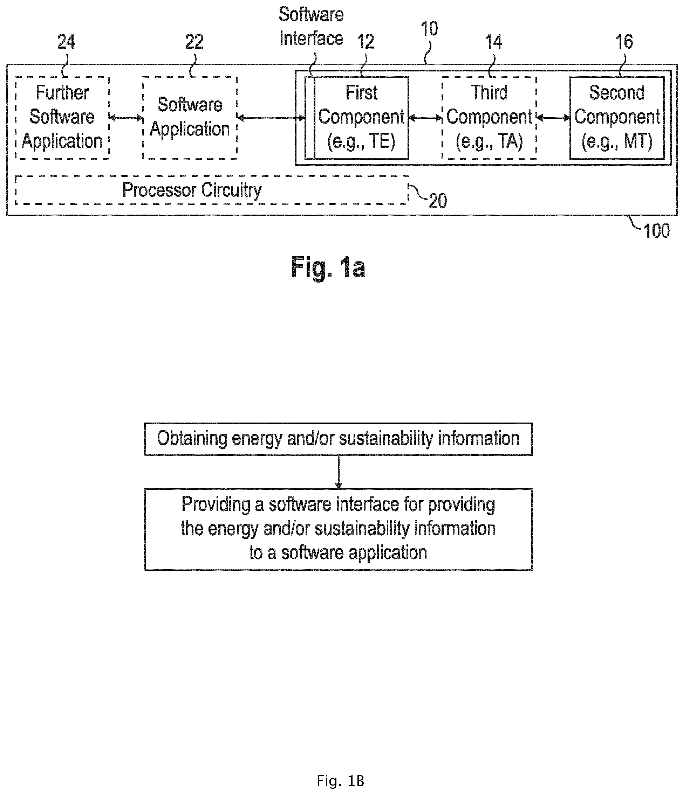

Fig. 1a shows a schematic diagram of an example of a communication device 100. The communication device 100 comprises a communication interface 10 with a first component 12 and a second component 16. The first component is configured to communicate with one or more software applications being executed on the communication device. The second component is configured to communicate within a communication network 200. The first component is configured to obtain energy and/or sustainability information from the second component, the energy and/or sustainability information being related to a communication of the second component within the communication network. The first component is configured to provide a software interface for providing the energy and/or sustainability information to a software application 22 being executed on the communication device. For example, the communication device may comprise circuitry 20 configured to execute the software application. For example, the software application, which may be a SEAL application, UICC application, or a software application of an operator of the communication network, may be configured to obtain the energy and/or sustainability information from the first component via the software interface.

Fig. 1b shows a flow chart of an example of a corresponding method for a communication device, e.g., for the communication device 100 of Fig. 1a. The method comprises obtaining 110, by the first component of the communication interface of the communication device, the energy and/or sustainability information from the second component of the communication interface. The method comprises providing 120, by the first component, the software interface for providing the energy and/or sustainability information to a software application being executed on the communication device. For example, the method may be performed by the communication device.

In the following, the features of the communication device, of the corresponding method, and of a corresponding computer program will be introduced in more detail with reference to the communication device 100. Features introduced in connection with the communication device 100 may likewise be included in the corresponding method and computer program.

The present disclosure relates to communication devices, and more specifically to communication devices with a communication interface having a first component for communicating with one or more software applications being executed (on processor circuitry 20) of the communication device and a second component for communicating within a communication network. For example, such a scenario can be found in mobile communication devices, e.g., cellular communication devices. For example, in cellular communication devices, in general, the communication interface comprises three components - a Terminal Equipment entity (TE), a Terminal Application entity (TA), and a Mobile Termination entity (MT). In the context of the present application, the TE may correspond to the first component and the MT may correspond to the second component. The TA is a communication intermediary between the TE and the MT. Accordingly, the communication interface may be suitable for communicating in a cellular communication network, with the communication interface comprising a TE corresponding to the first component, a MT corresponding to the second component, and a TA corresponding to a third component of the communication interface, with the TE communicating with the MT via the TA. However, examples are not limited to cellular communication devices. The proposed concept may likewise be applied to other types of communication devices, such as cable modems, routers (with integrated modems), access points, tablet computers, computer systems, provided they include a communication interface with a first software-facing component and a second network-facing component.

In the present application, the communication interface 10 comprises a first component 12, a second component 16, and an optional third component 14. However, these first to third components need not necessarily be different hardware components. In some examples, the first, second and third component may relate to different functional aspects of the same hardware component. Likewise, at least one of the components (e.g., the first component) may be implemented as software being executed on a processor, e.g., the same processor circuitry being used to execute the software application. For example, in cellular communication devices, such as smartphones, the first component may be implemented as software being executed on a processor of the cellular communication device, while the second component is being implemented as part of a baseband processor of the cellular communication device.

The present application is centered around the first component of the communication interface, e.g., the TE of the cellular communication device. This first component provides an abstraction layer for accessing the energy and/or sustainability information (in the following also denoted energy-related information). As outlined above, the energy and/or sustainability information is related to a communication of the second component within the communication network. The energy and/or sustainability information is not related to a battery/charge level of the communication device. The energy and/or sustainability information is information that is suitable for making decisions that impact the energy use and/or sustainability of the communication device or of the communication network being used by the communication device (e.g., of the cellular communication network, or of a cell or tracking area thereof). As will be outlined in the following, the energy and/or sustainability information may be used to trigger one or more actions that impact the energy use and/or sustainability of the communication device or of the communication network. For example, the energy and/or sustainability information may be used to trigger use of a different radio access technology, use of a different Quality of Service flow etc., which reduces the energy use or carbon footprint of the operation of the communication device or communication network. In this context, the term "sustainability" and "sustainability information" primarily relates to a carbon footprint, and information representing the carbon footprint, of the communication of the communication device caused by the communication device communicating in the communication network. For example, different cells of the communication network may be powered by different energy sources (e.g., solar energy and coal energy), which may affect the carbon footprint of using one cell (or radio access technology) compared to the carbon foot print of using another cell or radio access technology. The term sustainability information therefore relates to information on an environmental impact (e.g., carbon footprint) of a communication (by the communication device) in the communication network, e.g., a current environmental impact or a potential environmental impact (if the communication device were to use a specific service, cell, access technology etc.). For example, the energy and/or sustainability information may be provided with respect to a communication device-side, with respect to a communication network-side, for a given time frame/span/period, represented by an absolute amount of energy (e.g., Joules, Watt-hours), and/or represented by a power measure (e.g., Watt).

Towards the second component, the first component may use a communication interface-internal communication protocol. For example, modems are often controlled via so-called Attention (AT) commands, which are text-based commands according to an AT command specification. Another option is the use of a (messaging-based or remote invocation-based) Application Programming Interface (API). In the case of cellular communication devices, AT commands are used by the TE to control the MT via the TA, with the TA communicating with the TE using AT commands and corresponding responses, and with the TA communicating with the MT using MT commands and corresponding responses. In more general terms, the first component (e.g., the TE) may be configured to communicate with the second component (e.g., the MT) via a third component 14 (e.g., the TA) of the communication device, with the first component communicating with or via the third component of the communication device using AT commands or using an API. In the present case, the AT commands or API may provide explicit support for obtaining the energy and/or sustainability information. In other words, the AT commands or API may include support for obtaining the energy and/or sustainability information from the second component via the third component.

Towards the software application, the first component provides the software interface. For example, the software interface may be a memory-based software interface or an API, which enables the software application to obtain the energy and/or sustainability information. Similarly, the memory-based software interface and/or API may enable the software application to request the energy and/or sustainability information from the first component.

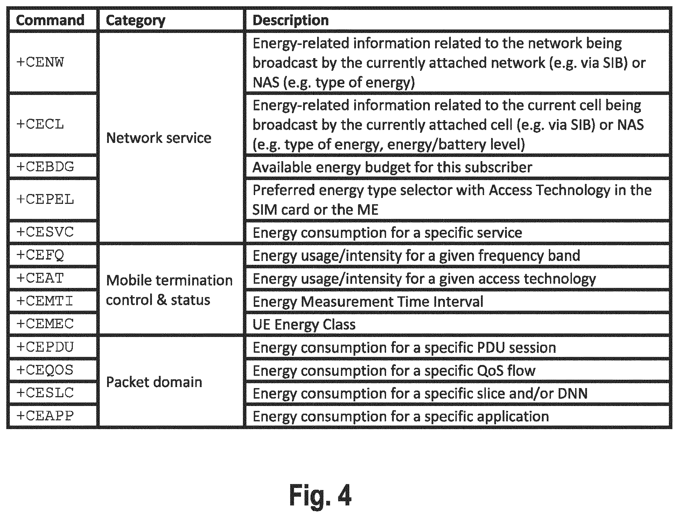

Both the AT commands or API being used to obtain (e.g., request and receive) the energy and/or sustainability information from the second component and the software interface being used to provide the energy and/or sustainability information to software application may provide explicit support for requesting and obtaining the respective information. In particular, the AT commands or Application Programming Interface may include support for obtaining at least one of energy and/or sustainability information related to a network service provided by an operator of the communication network, energy and/or sustainability information related to an energy usage or energy measurement locally at the communication device, and energy and/or sustainability information related to a sustainability level or energy consumption of a packet-domain aggregation of communication from the second component. For example, in connection with Fig. 4, examples regarding suitable AT commands for obtaining the energy and/or sustainability information related to the network service provided by an operator of the communication network (category "network service"), energy and/or sustainability information related to the energy usage or energy measurement locally at the communication device (category "mobile termination control & status"), and energy and/or sustainability information related to the energy consumption or sustainability level of a packet-domain aggregation of communication (category "packet domain") are listed. Similar commands may be implemented via the respective API. Similarly, the first component may be configured to provide the software interface with support for providing at least one of energy and/or sustainability information related to the network service provided by an operator of the communication network, energy and/or sustainability information related to the energy usage or energy measurement locally at the communication device, and energy and/or sustainability information related to the energy consumption or sustainability level of a packet-domain aggregation of communication to the software application.

As is evident from the above listing, three different types of energy and/or sustainability information may be distinguished - a) energy and/or sustainability information related to the network service provided by an operator of the communication network, b) energy and/or sustainability information related to the energy usage or energy measurement locally at the communication device, and c) energy and/or sustainability information related to the energy consumption or sustainability level of a packet-domain aggregation of communication. As is evident, energy and/or sustainability information of group a) may be obtained from the communication network, b) may be measured locally at the communication device, and c) may be determined based both on local information and information obtained from the communication network. All three types of information may be determined by the second component. **In** particular, the second component may be configured to determine the energy and/or sustainability information based on at least one of one or more device-side energy-related measurements (e.g., b) and c)), network-side energy and/or sustainability information received from an infrastructure element of the communication network (e.g., a) and b)), and stored energy and/or sustainability information contained in a Subscriber Identity Module (SIM) hosted by the communication device (e.g., b)).

For example, the energy and/or sustainability information related to a network service provided by an operator of the communication network may comprise one or more of energy and/or sustainability information related to a currently attached communication network (e.g., obtained via AT command +CENW discussed in connection with Fig. 4), energy and/or sustainability information related to a currently attached cell and/or used access technology of the communication network (e.g., obtained via AT command +CECL discussed in connection with Fig. 4), information on a network-side energy budget being available for the communication device (e.g., obtained via AT command +CEBDG discussed in connection with Fig. 4), information on at least one preferred energy or sustainability type criterion for cell selection (e.g., obtained via AT command +CEPEL discussed in connection with Fig. 4), and information on an energy consumption or sustainability level for a specific service (e.g., obtained via AT command +CESVC discussed in connection with Fig. 4). For example, the energy and/or sustainability information related to a network service provided by an operator of the communication network may be obtained, by the second component, from an infrastructure element (e.g., a base station or a cable modem termination service) of the communication network. For example, in the case of the communication network being a cellular communication network, the second component may be configured to obtain the energy and/or sustainability information related to a network service provided by an operator of the communication network via one or more of a SIB (System Information Block), RRC (Radio Resource Control) message and a NAS (Non-Access Stratum) message, e.g., a NAS message containing a Steering of Roaming (SoR), UE Configuration Update (UCU) or UE Parameter Update (UPU) message.

For example, the energy and/or sustainability information related to a currently attached communication network may comprise one or more of information on a type of energy being used by the network, e.g., whether the information is renewable, the energy mix of the energy source, information on an available energy budget for this subscriber, e.g., the number of kWh available for the communication device to use over a specific time, and information on a preferred energy type criteria for network/cell selection, e.g. prefer networks/cells using renewable energy for a specific access technology (e.g. 5G-NR (New Radio), WiFi (Wireless Fidelity)).

For example, the energy and/or sustainability information related to a currently attached cell and/or used access technology of the communication network may comprise one or more of information on a type of energy being used by the currently attached cell, e.g., whether the information is renewable, the energy mix of the energy source, and information on the energy (e.g., battery charge) available at the currently attached cell.

For example, the information on the network-side energy budget being available for the communication device may comprise information on an available amount of energy the communication device is allowed to consume (either network-side and/or communication device-side). The communication device may be indicated not to go over the indicated energy consumption (e.g., the communication network may then throttle or stop the data service if the energy budget is surpassed).

For example, the information on the at least one preferred energy or sustainability type criterion for cell selection may comprise information a priority list that can be used for network and/or cell selection. Both aspects may be transmitted as part of Mobility Management (MM) parameter update(s), e.g., via UCU/SoR. A preferred energy type selection may allow a communication to prioritize cells/networks using renewable energy or a specific energy mix (based on the information provided on the communication network or cell/access technology of the communication network).

For example, the information on an energy consumption or sustainability level for a specific service may represent the energy usage (e.g., in Wh) or energy intensity (e.g., in W) for a specific service (e.g., identified by a service name, such as "SMS").

As outlined above, the second component may be configured to receive, from the infrastructure element of the communication network, network-side energy and/or sustainability information, and to determine the energy and/or sustainability information based on the network-side energy and/or sustainability information. For example, the network-side energy and/or sustainability information may comprise at least one of the energy and/or sustainability information related to a currently attached communication network, the energy and/or sustainability information related to a currently attached cell of the communication network, the information on a network-side energy budget being available for the communication device, and the information on at least one preferred energy type criterion for cell selection.

For example, the energy and/or sustainability information related to an energy usage or energy measurement locally at the communication device may comprise one or more of information on an energy class of the communication device (e.g., obtained via AT command +CEMEC discussed in connection with Fig. 4), information on an energy usage or intensity for a given frequency band (e.g., obtained via AT command +CEFQ discussed in connection with Fig. 4), and information on an energy usage or intensity for a given access technology (e.g., obtained via AT command +CEAT discussed in connection with Fig. 4). For example, the second component may be configured to determine the information related to an energy usage or energy measurement locally at the communication device, e.g., by measuring the respective energy usage or evaluating existing measurements.

For example, the information on the energy usage or intensity for a given frequency band may represent the energy usage (e.g., in Wh) or energy intensity (e.g., in W) for a given frequency band (e.g., referenced by band name). For example, the information on the energy usage or intensity for a given access technology may represent the energy usage (e.g., in Wh) or energy intensity (e.g., in W) for a given access technology. These types of information may be measured locally at the communication device or be determined based on information received from the communication network. For example, the network-side energy and/or sustainability information may comprise information on an energy consumption for a tracking area, cell, frequency band, frequency band combination, PDU session, QoS flow, service, or application.

In some examples, the energy and/or sustainability information related to an energy consumption and/or energy consumption or sustainability level of a packet-domain aggregation of communication may comprise one or more of information on an energy consumption for a specific Packet Data Unit (PDU) session (e.g., obtained via AT command +CEPDU discussed in connection with Fig. 4), information on an energy consumption for a specific Quality of Service, QoS, flow (e.g., obtained via AT command +CEQOS discussed in connection with Fig. 4), information on an energy consumption for a specific slice or Data Network Name, DNN (e.g., obtained via AT command +CESLC discussed in connection with Fig. 4), and information on an energy consumption for a specific application (e.g., obtained via AT command +CEAPP discussed in connection with Fig. 4). For example, the information on an energy consumption for a specific Packet Data Unit session may represent the energy usage (e.g., in Wh) or energy intensity (e.g., in W) for a specific PDU session. For example, the information on the energy consumption for a specific QoS flow may represent the energy usage (e.g., in Wh) or energy intensity (e.g., in W) for a specific QoS flow. For example, the information on an energy consumption for a specific slice or Data Network Name may represent the energy usage (e.g., in Wh) or energy intensity (e.g., in W) for a specific slice, DNN, of combination of slice and DNN. For example, the information on an energy consumption for a specific application may represent the energy usage (e.g., in Wh) or energy intensity (e.g., in W) for a specific application (e.g., by application identifier or operating system identifier/application identifier).

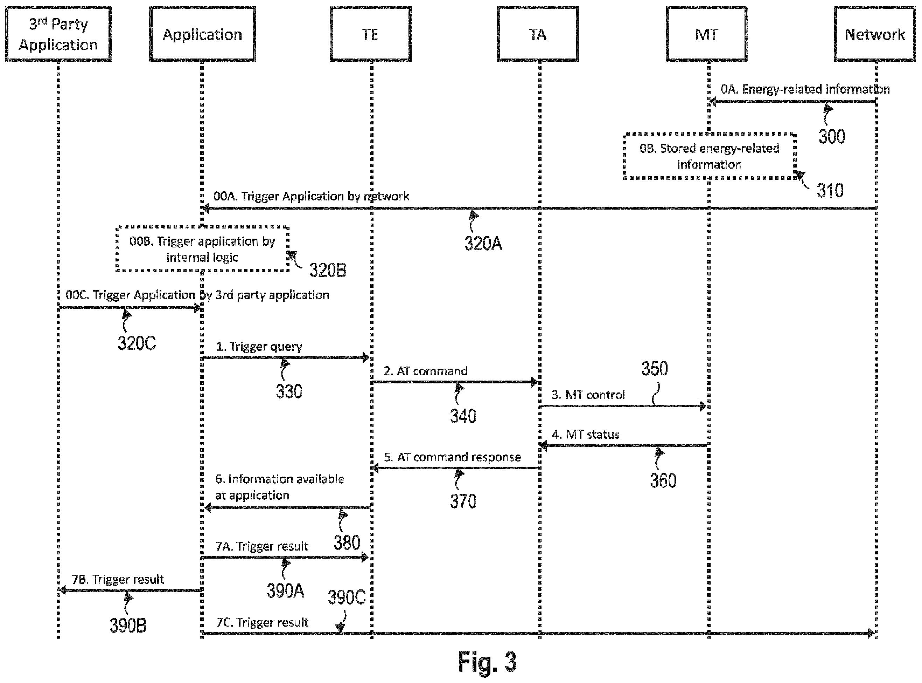

In the following, and with reference to Fig. 3, a flow of determining the energy and/or sustainability information, providing it, and using it to trigger actions is presented, starting with the determination of the energy and/or sustainability information. For example, as shown by arrow 300, the second component (denoted MT in Fig. 3) may be configured to receive a first portion of the energy and/or sustainability information from the communication network (e.g., from a base station or from a core network element of the communication network).

Additionally, or alternatively, as indicated by arrow 310, the second component may be configured to determine a second portion of the energy and/or sustainability information based on locally measured and/or locally stored information.

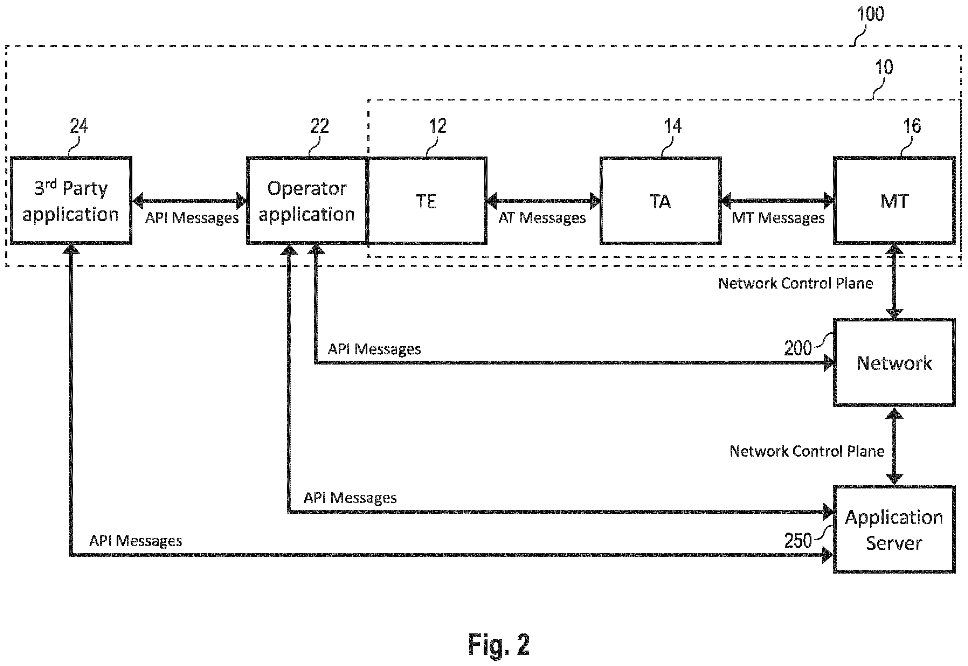

In a second, separate and independent part of the flow shown in Fig. 3, the software application is triggered to obtain the energy and/or sustainability information from the first component via the software interface. For example, the software application may be configured to obtain the energy and/or sustainability information from the first component via the software interface in response to a trigger. In Fig. 3, three potential triggers (indicated by arrows 320A-320C) are shown. For example, the trigger ,au be based on one of a request by an infrastructure element of the communication network (indicated by arrow 320A), a request by an application server (indicated by arrow 320C, with the application server being shown in Fig. 2 as application server 250), a request by another software application 24 being executed on the communication device (also indicated by arrow 320C), and an internal logic of the software application (indicated by arrow 320B), such as a timer-based logic. To obtain the request(s) from the other entities (e.g., from the communication network, from the application server, or from another local software application), the software application may itself provide an API. In other words, the software application may be configured to provide an API to obtain the request by the other software application, infrastructure element or application server on an application layer. For example, for requests being provided by the communication network (e.g., by a base station or core network element of the communication network), the software application may provide an API according to the SEAL specification. In other words, the software application may be configured to obtain the request by the infrastructure element via a SEAL API.

Based on the trigger, the software application may request the energy and/or sustainability information from the first component, which may in turn request the energy and/or sustainability information from the second component (e.g., via the third component). In Fig. 3, this process is highlighted by arrows 330-380, with the software application requesting the energy and/or sustainability information from the first component (arrow 330), the first component providing an AT command to the third component (arrow 340), the third component providing an MT control to the second component (arrow 350), the second component returning an MT status to the third component (arrow 360), the third component returning an AT command response to the first component (arrow 370), and the first component returning the energy and/or sustainability information to the application (arrow 380).

In some examples, such a process may be complemented by a setup where the second component automatically provides the energy and/or sustainability information to the first component according to a schedule or when values have changed. For example, the first component may be configured to provide a request for the energy and/or sustainability information to the second component (e.g., arrows 330, 340), with the request comprising information on at least one of a time threshold and a value threshold. Based on the included time threshold or value threshold, the second component may automatically provide updated energy and/or sustainability information to the first component. In other words, the second component may be configured to provide the energy and/or sustainability information according to the information on at least one of the time threshold and value threshold.

Once the energy and/or sustainability information is obtained by the software application, it may be used to evaluate and/or change the energy use or sustainability of operating the communication device. This is indicated by the arrows 390A-390C in Fig. 3, where a trigger result is provided to another entity, such as another application (or application server, arrow 390B), the first component (arrow 390A), or the communication network (arrow 390C). In general terms, the software application may be configured to provide a message (i.e., the trigger result) to another entity based on the energy and/or sustainability information.

For example, as indicated by arrow 390A, the software application may control the first component to directly or indirectly change an energy use of the communication device. In other words, the software application may be configured to provide the message to the first component. For example, the message may comprise a command for adapting the energy use of the communication device. For example, the message may comprise a command being suitable for triggering or setting at least one of a set phone functionality (which may be translated by the first component into the +CFUN AT command), a power saving mode setting (which may be translated by the first component into the +CPSMS AT command), a Public Land Mobile Network (PLMN) selection (which may be translated by the first component into the +COPS AT command), and a power preference indication (e.g., for the Evolved Packet System, EPS, and 5GS, which may be translated by the first component into the +CEPPI AT command). The set phone functionality +CFUN command selects the level of functionality <fun> in the MT. Level "full functionality" is where the highest level of power is drawn. "Minimum functionality" is where minimum power is drawn. Level of functionality between these may also be specified by manufacturers. The power saving mode setting +CPSMS controls the setting of the communication device's power saving mode (PSM) parameters. The command controls whether the UE wants to apply PSM or not, as well as other related parameters. The power preference indication command +CEPPI indicates whether the second component prefers a configuration primarily optimized for power saving or not.

The respective AT command may be provided by the first component to the second component (via the third component). For example, the software application may be configured to provide a message with a command for triggering the set phone functionality based on one or more of the energy and/or sustainability information related to a currently attached communication network, the energy and/or sustainability information related to a currently attached cell and/or used access technology of the communication network, and the information on a network-side energy budget being available for the communication device. For example, the software application may be configured to provide a message with a command for setting the power saving mode setting based on one or more of the energy and/or sustainability information related to a currently attached communication network, the energy and/or sustainability information related to a currently attached cell and/or used access technology of the communication network, and the information on a network-side energy budget being available for the communication device. For example, the software application may be configured to provide a message with a command for setting the power preference indication based on one or more of the energy and/or sustainability information related to a currently attached communication network, the energy and/or sustainability information related to a currently attached cell and/or used access technology of the communication network, and the information on a network-side energy budget being available for the communication device. For example, the software application may be configured to provide a message with a command for triggering the PLMN selection based on the information on the at least one preferred energy or sustainability type criterion for cell selection.

Alternatively, or additionally, may be configured to provide the message to one of an infrastructure element of the communication network, an application server, and another application being executed on the communication device. For example, the message may comprise the energy and/or sustainability information. For example, the respective other entity (infrastructure element of the communication network, application server or other application) may use the energy and/or sustainability information to improve their energy use (i.e., decrease the energy use or the carbon footprint of the energy use).

In some examples, the software application may send the message to the infrastructure element of the communication network in order to adapt the operation of the communication device. As a result, the software application may instruct the communication network, on an application layer, to change a communication parameter that affects the communication device (instead of using commands or requests issued by the second component). For example, the software application may be configured to provide the message to the infrastructure element of the communication network, the message comprising a request or command to change a parameter related to a communication of the communication device within the communication network. For example, the software application may be configured to provide the message to the infrastructure element via a SEAL API of provided by the communication network. For example, the request or command to change a parameter related to a communication of the communication device within the communication network may relate to changing the QoS of a specific PDU session, QoS flow, to request a change in network selection preference. In addition, or alternatively, the message may comprise the current communication device energy status, especially containing the energy and/or sustainability information.

For example, the processor circuitry 20 may be implemented using one or more processing units, one or more processing devices, any means for processing, such as a processor, a computer or a programmable hardware component being operable with accordingly adapted software. In other words, the described function of the processor circuitry may as well be implemented in software, which is then executed on one or more programmable hardware components. Such hardware components may comprise a general-purpose processor, a Digital Signal Processor (DSP), a micro-controller, etc.

For example, the communication network may be at least one of a wireless communication network, a cellular communication network (e.g., a cellular communication according to a standard set by the Third-Generation Partnership Project, 3GPP), a wired communication network, a cable communication network, a fiber-based communication network and a Digital Subscriber Line communication network.

The communication device may be a modem, a router, a mobile device, a user equipment (UE), a mobile station (MS), a smartphone, a tablet computer, a laptop computer etc.

More details and aspects of the communication device and corresponding method and computer program are mentioned in connection with the proposed concept, or one or more examples described above or below (e.g., Fig. 2 to 4). The communication device and corresponding method and computer program may comprise one or more additional optional features corresponding to one or more aspects of the proposed concept, or one or more examples described above or below.

Various examples of the present disclosure relate to a concept (e.g., a method) for retrieval of energy-related information via AT commands.

As outlined above, there is currently no standardized manner in which energy-related information can be retrieved from a UE. A possible way to allow applications (both operator-owned and 3^{rd} party application) would be allow the UE to expose energy-related information via AT commands.

Various examples of the proposed concept are based on an addition of energy-related information not covered by other systems to the UE's AT commands abstraction layer. AT modem commands are widely accepted as a standardized way for (all) applications to read/control modems. **In** various examples of the present disclosure, one or more of the following AT Command functionalities is proposed. a) an AT command for obtaining information on an energy usage/intensity regarding each frequency/band, b) an AT command for obtaining information on an energy usage/intensity regarding each access technology, c) an AT command for obtaining information on an energy usage/intensity regarding an UE energy class, d) an AT command for obtaining information on an energy usage/intensity regarding the transmission of data packets (e.g., per PDU (Packet Data Unit) session, per QoS (Quality of Service) flow, per slice/DNN (Data Network Name), and/or per application, e) an AT command for obtaining energy information retrieved from the network (e.g., via SIB (System Information Block) or NAS (Non-Access Stratum)), such as type of energy, energy level, remaining energy budget (e.g., based on charging information).

The proposed concept may enable or facilitate standardized data retrieval of energy-related information via AT commands. It may enable triggering of existing (or new) logic based on the retrieved information. For example, logic may be triggered by/at a TE, which may include triggering a set phone functionality +CFUN, Power saving mode setting +CPSMS, PLMN (Public Land Mobile Network) selection +COPS and/or Power preference indication for EPS (Evolved Packet System) and 5GS +CEPPI (Power Preference Indication for EPS). For example, logic may be trigger by/at a further application, especially but not limited to an application co-located in the same UE or located outside of the UE, e.g., an application server on the internet, especially containing the information received in the AT command response. For example, logic may be triggered by/at the network, especially by means of a SEAL API, especially regarding changing the QoS of a specific PDU session, QoS flow, to request a change in network selection preference and/or to signal the current UE energy status, especially containing the information received in the AT command response.

In various examples of the present disclosure, energy efficiency and energy saving are considered as service criteria. In particular, the present disclosure provides a framework for network energy consumption exposure. For example, the proposed framework may define whether and what information is exposed, how it is exposed (e.g., charging) and at what granularity, e.g., at RAN (Radio Access Network) level, Core Network level, network slice level, UE level, PDU session level, and/or QoS flow level. Additionally, the framework may define whether and how renewable energy or carbon emission information for such granularities can be exposed by an MNO.

Various examples of the present disclosure may enable or provide an architecture as shown in Fig. 2 in the context of UE-based exposure of energy efficiency information. Fig. 2 shows a schematic diagram of a proposed architecture. Fig. 2 shows a communication device 100 (e.g., a UE) with a communication interface 10. The communication interface comprises a TE (e.g., the first component) 12, a TE (e.g., the third component) 14, and an MT (e.g., the second component) 16). The TE 12 and the TA 14 communicate via AT messages/commands, and the TA 14 and the MT 16 communicate via MT messages. An operator application 22 (e.g., the software application) communicates with the TE 12. A network element of the communication network 200 communicates with the operator application 22 via API messages. For example, the network 200 can query the UE 100 via an API (e.g., using existing technologies such as SEAL and authorized via CAPIF), such that the UE returns energy-related information to the network. In addition, the communication network 200 communicates with the MT 16 via the network control plane, and with an application server 250 via the network control plane. The application server 250 may additionally communicate with the operator application 22 or with a third-party application 24 (e.g., the further software application) via API messages. The third-party application 24 may communicate with the operator application 22 via API messages.

The proposed approach has the advantage of being possible on the application layer (e.g., over-the-top (OTT) or based on the 3GPP-based SEAL APIs) and being more flexible than a purely control-plane-based approach. However, without an abstraction layer exposing the modem's energy-related information to higher layers, it might not be possible for applications (be it operator-owned or 3^{rd} party) to access said information. In order to allow for a broad usability with the current ecosystem of UE applications, the present disclosure proposes an abstraction layer (e.g., the software interface) that is based on AT commands, such that the TE serves as abstraction layer for energy-related information in the UE. An example of a call flow is shown in Fig. 3.

Fig. 3 shows a flow diagram of a call flow for energy-related AT commands. As shown by arrows 300 and 310, at 0., energy-related information is available at the UE (MT). For example, as indicated by arrow 300 and numeral 0A., signaling by the network, such as via SIB, NAS or Over-the-Top (OTT, e.g., SEAL, e.g., as discussed in European patent applications EP4087200A1, EP4087326A1, WO2015039122A1) may be used to obtain the network-related information, such as type of energy being used by the network/cell, battery level of a given cell, available energy budget for this subscriber (e.g., the subscriber may be limited to a maximum amount of energy usage), preferred energy type criteria for network/cell selection (e.g., prefer networks/cells using renewable energy for a specific access technology, such as 5G-NR; typically, this information may be sent via a Steering of Roaming (SoR), UE Configuration Update (UCU) or UE Parameter Update (UPU), or amount of energy used (network-side), related to one or more granularities, e.g., cell, Tracking Area (TA), PDU session, QoS flow, service. Additionally, or alternatively, as indicated by arrow 310 and numeral 0B., the UE may be (pre-)configured with energy-related information, e.g., as part of the information contained in the UICC/USIM (e.g., operator pre-configured network selection information) or the device.

In some examples, a trigger (numeral 00.) for the application logic may be used. For example, as indicated by arrow 320A and numeral 00A., the network may signal the application (e.g., via the SEAL interface) to trigger the AT command, e.g., if it changes the SIB(s) in some cells, such that the UE can timely perform network/cell reselection. Additionally, or alternatively, as indicated by arrow 320B and numeral 00B, the application may contain internal logic to trigger, e.g., a timer-based internal logic. Additionally, or alternatively, as indicated by arrow 320C and numeral 00C, a third-party application may trigger the application to query the AT command, e.g., because the application may have preferences regarding the use of certain energy types (e.g., a Service Level Agreement, SLA) which it needs to request the UE to fulfill.

As indicated by arrow 330 and identifier 1., the (software) application triggers a query to obtain the current energy-related status/value (e.g., done via interaction with a TE based on an API/software library). Subsequently, as indicated by arrow 340 and numeral 2., the TE issues the claimed AT-Command set over the AT command line interface (serial interface) e.g., <AT+COMMAND>. Subsequently, as indicated by arrow 350 and numeral 3., the TA forwards the request to the MT. Subsequently, as indicated by arrow 360 and numeral 4., the MT sends the result to the TA. Subsequently, as indicated by arrow 370 and numeral 5., the TA forwards the result to the TE in form of an AT-Command result like: <CR><LF>+COMMAND:(RANGE,VALUE) <CR><LF>, where +COMMAND points at the result to a query of the +COMMAND value, (RANGE,VALUE) corresponds to a value range of (e.g., 0-50) and a current value (e.g., 15), <CR> is a carriage return control character and <LF> is a line feed control character. Subsequently, as indicated by arrow 380 and numeral 6., the TE forwards the result to the application.

Resulting from the retrieved energy-related information, the following triggering logic (numerals 7A-7C, indicated by arrows 390A-390C) may be considered. For example, as indicated by arrow 390A and numeral 7A, a further AT command may be triggered by the application at the TE, for example a set phone functionality +CFUN to adjust the power draw of the UE between a "full functionality" Level where the highest level of power is drawn (e.g., if renewable energy is available and/or the serving cell's battery level is high) and a "Minimum functionality" where minimum power is drawn (e.g., is renewable energy is not available and/or the serving cell's battery level is low), a power saving mode setting +CPSMS (e.g., is renewable energy is not available and/or the serving cell's battery level is low), a power preference indication for EPS and 5GS +CEPPI (e.g., is renewable energy is not available and/or the serving cell's battery level is low), or a trigger PLMN selection +COPS (e.g., such that the information can be applied timely). For example, as indicated by arrow 390B and numeral 7B, a message may be sent by the application to a further (e.g., third-party) application, e.g., to a third-party application in the UE, e.g., to notify a streaming application to throttle down its data consumption because the maximum energy budget for the subscriber has been reached, such that the application can reduce/stop its bandwidth use or inform the application that the current cell is served using renewable energy so it can increase it bandwidth usage, or to a further application not in the UE (i.e., outside the UE), e.g., a similar to the previous case but in this case notifying the application server (e.g., a streaming service's server) to steer their behavior. For example, as indicated by arrow 390C and numeral 7B, the application may send a message to the network, e.g., by means of a SEAL API, e.g., such that the QoS of the UE can be reduced if the energy budget is almost exhausted.

In the following, more examples are given with respect to the AT-Command-based MT abstraction layer. In the present disclosure, an abstraction layer for energy-related information (i.e., energy and/or sustainability information) based on AT commands is proposed. An example set of one or more of the AT commands shown in Fig. 4 are proposed. Note that it is customary to begin the name of AT commands related to cellular with a "C".

In Fig. 4, three categories of AT commands are shown - network service, mobile termination control & status, and packet domain. For example, the network service category may comprise one or more of a +CENW command for obtaining energy-related information related to the network being broadcast by the currently attached network (e.g., via SIB) or NAS (e.g., type of energy), a +CECL command for obtaining energy-related information related to the current cell being broadcast by the currently attached cell (e.g., via SIB) or NAS (e.g., type of energy, energy/battery level), a +CEBDG command for obtaining information on an available energy budget for this subscriber, a +CEPEL command for obtaining information on a preferred energy type selector with Access Technology in the SIM card or the ME (Mobile Equipment), and a +CESVC command for obtaining information on an energy consumption for a specific service. For example, the mobile termination control & status category may comprise one or more of a +CEFQ command for obtaining information on an energy usage/intensity for a given frequency band, a +CEAT command for obtaining information on an energy usage/intensity for a given access technology, a +CEMTI command for obtaining information on an Energy Measurement Time Interval, and a +CEMEC command for obtaining information on an energy class of the UE. For example, the packet domain category may comprise one or more of a +CEPDU command for obtaining information on an energy consumption for a specific PDU session, a +CEQOS command for obtaining information on an energy consumption for a specific QoS flow, a +CESLC command for obtaining information on an energy consumption for a specific slice and/or DNN, and a +CEAPP command for obtaining information on an energy consumption for a specific application. More details on the respective commands will be given in the following.

Analogously, some aspects of the present disclosure relate to a periodic/on-change reading of the previous parameters via a subscribe/notify mechanism, such that if a parameter is changed, the value is reported via an AT command (e.g., change in available energy budget after a given value/time change threshold is reached).

The following (sub-)sections provide a brief summary of the parameters and possible outcomes resulting from the proposed commands according to an example.

For example, regarding the AT command for obtaining energy-related information related to the currently attached network (+CENW), one or more of a type of energy being used by the network, e.g., whether the information is renewable, the energy mix of the energy source, an available energy budget for this subscriber, e.g., the number of kWh available for the UE to use over a specific time, and a preferred energy type criteria for network/cell selection, e.g., prefer networks/cells using renewable energy for a specific access technology (e.g., 5G-NR (New Radio), WiFi (Wireless Fidelity)) may be included or represented in the response. In response to this information, one or more of the following actions may be triggered: a set phone functionality +CFUN, a power saving mode setting +CPSMS, power preference indication for EPS and 5GS +CEPPI, informing an application of the retrieved information, and messaging the network to adjust QoS (e.g., QoS flow adjustment, request alternative slice).

For example, regarding the AT command for obtaining energy-related information related to the currently attached cell (+CECL), one or more of a type of a type of energy being used by the currently attached cell, e.g., whether the information is renewable, the energy mix of the energy source and the energy (e.g., battery charge) available at the currently attached cell may be included or represented in the response. In response to this information, one or more of the following actions may be triggered: a set phone functionality +CFUN, a power saving mode setting +CPSMS, a power preference indication for EPS and 5GS +CEPPI, informing an application of the retrieved information, and messaging the network to adjust QoS (e.g., QoS flow adjustment, request alternative slice).

For example, using the AT command for obtaining information on an available energy budget for this subscriber (+CEBDG), a UE may be informed of the available amount of energy it is allowed to consume (either network-side and/or UE-side). The UE may be indicated not to go over the indicated energy consumption (e.g., the network may then throttle or stop the data service if the energy budget is surpassed). In response to this information, an action may be taken to throttle (up or down) energy consumption on the UE or signaling to the network to adjust energy consumption. For example, one or more of the following actions may be triggered: a set phone functionality +CFUN, a power saving mode setting +CPSMS, a power preference indication for EPS and 5GS +CEPPI, informing an application of the retrieved information, and messaging the network to adjust QoS (e.g., QoS flow adjustment, request alternative slice).

For example, using the AT command for obtaining information on a preferred energy type selector with Access Technology (+CEPEL), it may be possible to query a priority list that can be used for network and/or cell selection. Both aspects are typically transmitted as part of Mobility Management (MM) parameter update(s), e.g., via UCU/SoR. A preferred energy type selection may allow a UE to prioritize cells/networks using renewable energy or a specific energy mix (see +CENW, +CECL). For example, one or more of the following actions may be triggered: triggering network selection by using the PLMN selection +COPS command, especially with the "automatic" <oper>, such that the parameters can be taken into account on the network selection procedure.

For example, using the AT command for obtaining information on an energy usage/intensity for a given frequency band (+CEFQ), it may be possible to query the energy usage (e.g., Wh), also related to energy intensity (e.g., W) for a given frequency band, which can be referenced by the band name, such as n7 (2600 MHz) or frequency bands, which can be referenced by its Carrier Aggregation (CA) band name, such as CA_1-3-3-42 (combination of LTE bands B1, B3 and B42, see 3GPP TS 36.101, which contains a list of the band names). For example, one or both sides can be queried: the UE-based side, which can be measured by the UE and the network-based side, which is signaled by the network to the UE. For example, the energy usage (UE side) may be reported to the network (e.g., via SEAL).

The AT command for obtaining information on an energy usage/intensity for a given access technology (+CEAT) may be analogous to the AT command for obtaining information on energy usage/intensity for a given frequency band (+CEFQ) but related to a specific access technology (e.g., 5G-NR, WiFi).

For example, using the AT command for obtaining information on a UE Energy Class (+CEMEC), the UE Energy Class associated with this UE/subscriber may be obtained. The UE Energy Class may map to one or more energy-related parameters and may be used as a "compressed" way how a set of energy parameters can be classed/mapped with a single value.

The AT command for obtaining information on an energy consumption for a specific PDU session (+CEPDU) may be analogous to the AT command for obtaining information on an energy usage/intensity for a given frequency band (+CEFQ) but related to a specific PDU session (e.g., the PDU session ID tied to the IMS session).

The AT command for obtaining information on an energy consumption for a specific QoS flow (+CEQOS) may be analogous to the AT command for obtaining information on an energy usage/intensity for a given frequency band (+CEFQ) but related to a specific QoS flow within a PDU session.

The AT command for obtaining information on an energy consumption for a specific slice and/or DNN (+CESLC) may be analogous to the AT command for obtaining information on an energy usage/intensity for a given frequency band (+CEFQ) but related to a specific slice, DNN or combination of slice and DNN.

The AT command for obtaining information on an energy consumption for a specific application (+CEAPP) may be analogous to the AT command for obtaining information on an energy usage/intensity for a given frequency band (+CEFQ) but related to a specific application, e.g., identifier by an AppID (application identifier) or combination of OSAppId/OSId combination (See clause 6.2 of TS 23.503. It is used in URSP rules).

The AT command for obtaining information on an energy consumption for a specific service (+CESVC) may be analogous to the AT command for obtaining information on an energy usage/intensity for a given frequency band (+CEFQ) but related to a specific service, identified by a service name, e.g., "SMS".

Some examples of the present disclosure relate to a UE comprising a TE (e.g., a computer) and a MT interfaced by a TA (see Fig. 2), comprising an abstraction layer providing energy-related information to application(s) in the UE, wherein the TE is configured to request the TA energy-related information and the TA is configured to send the TE energy-related information.

Some examples relate to an application triggering the TE to request energy-related information.

In some examples, the TE may be configured to include a value and/or time threshold after which the TA should report the requested value, and the TA may be configured to send, e.g., repeatedly, the requested information based on the indicated time and/or value threshold.

In some examples, the abstraction layer is based on AT commands and/or an API.

In some examples, the network may provision the UE with any of the following information(s), especially via SIB, RRC (Radio Resource Control) or NAS message, especially a NAS message containing Steering of Roaming (SoR), UE Configuration Update (UCU) or UE Parameter Update (UPU) message: type of energy being used by the network/cell, battery level of a given cell, available energy budget for this subscriber, preferred energy type criteria for network/cell selection, especially specific to a given access technology, and amount of energy used (network-side), related to one or more granularities, e.g., cell, frequency band, frequency band combination, Tracking Area (TA), PDU session, QoS flow, service, application.

For example, the abstraction layer may provide information of any of the following: energy-related information related to the currently attached network (+CENW), energy-related information related to the currently attached cell (+CECL), available energy budget for this subscriber (+CEBDG), preferred energy type selector with Access Technology (+CEPEL), energy usage/intensity for a given frequency band (+CEFQ), energy usage/intensity for a given access technology (+CEAT), UE Energy Class (+CEMEC), energy consumption for a specific PDU session (+CEPDU), energy consumption for a specific QoS flow (+CEQOS), energy consumption for a specific slice and/or DNN (+CESLC), energy consumption for a specific application (+CEAPP), energy consumption for a specific service (+CESVC).

The energy consumption may be related to one or more of the UE-side, the network-side, a given time frame/span/period, an absolute amount of energy (e.g., Joules, Watt-hours), and a power measure (e.g., Watt).

For example, may be a SEAL application or UICC application.

For example, the application may send a message to the TE, e.g., triggering a Set phone functionality +CFUN, Power saving mode setting +CPSMS, PLMN selection +COPS and/or Power preference indication for EPS and 5GS +CEPPI. For example, the application may send a message to a further application, e.g., but not limited to an application co-located in the same UE or located outside of the UE, e.g., an application server on the internet, e.g., containing the information received in the AT command response. For example, the application may send a message to the network, e.g., by means of a SEAL API, e.g., regarding changing the QoS of a specific PDU session, QoS flow, to request a change in network selection preference and/or to signal the current UE energy status, e.g., containing the information received in the AT command response.

For example, the application trigger may be triggered by internal logic, e.g., a time-based trigger, the network, e.g., via a SEAL interface, and/or the further application or another further application.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several substeps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example.

## Claims

1. A communication device (100) comprising:
a communication interface (10) with a first component (12) and a second component (16),
wherein the first component is configured to communicate with one or more software applications being executed on the communication device,
wherein the second component is configured to communicate within a communication network (200),
wherein the first component is configured to obtain energy and/or sustainability information from the second component, the energy and/or sustainability information being related to a communication of the second component within the communication network, wherein the energy and/or sustainability information is information that is suitable for making decisions that impact the energy use and/or sustainability of the communication device or of the communication network being used by the communication device, and wherein the sustainability information is information on an environmental impact,
wherein the first component is configured to provide a software interface for providing the energy and/or sustainability information to a software application (22) being executed on the communication device,
wherein the first component is configured to communicate with the second component via a third component (14) of the communication device, with the first component communicating with or via the third component of the communication device using Attention, AT, commands or using an Application Programming Interface, API, with the AT commands or Application Programming Interface including support for obtaining the energy and/or sustainability information from the second component via the third component,
wherein the AT commands or Application Programming Interface include support for obtaining said energy and/or sustainability information comprising at least one of energy and/or sustainability information related to a network service provided by an operator of the communication network, energy and/or sustainability information related to an energy usage or energy measurement locally at the communication device, and energy and/or sustainability information related to a sustainability level or energy consumption of a packet-domain aggregation of communication from the second component,
wherein the energy and/or sustainability information related to a network service provided by an operator of the communication network comprises one or more of information on a network-side energy budget being available for the communication device, information on at least one preferred energy or sustainability type criterion for cell selection, and information on an energy consumption or sustainability level for a specific service, and
wherein the energy and/or sustainability information related to an energy usage or energy measurement locally at the communication device is measured locally at the communication device

2. The communication device according to claim 1, wherein the energy and/or sustainability information related to a network service provided by an operator of the communication network further comprises one or more of energy and/or sustainability information related to a currently attached communication network, energy and/or sustainability information related to a currently attached cell and/or used access technology of the communication network.

3. The communication device according to one of the claims 1 or 2, wherein the energy and/or sustainability information related to an energy usage or energy measurement locally at the communication device comprises one or more of information on an energy class of the communication device, information on an energy usage or intensity for a given frequency band, information on an energy usage or intensity for a given access technology.

4. The communication device according to one of the claims 1 to 3, wherein the energy and/or sustainability information related to an energy consumption and/or energy consumption or sustainability level of a packet-domain aggregation of communication comprises one or more of information on an energy consumption for a specific Packet Data Unit session, information on an energy consumption for a specific Quality of Service, QoS, flow, information on an energy consumption for a specific slice or Data Network Name, DNN, and information on an energy consumption for a specific application.

5. The communication device according to one of the claims 1 to 4, wherein the first component is configured to provide a request for the energy and/or sustainability information to the second component, the request comprising information on at least one of a time threshold and a value threshold, and the second component is configured to provide the energy and/or sustainability information according to the information on at least one of the time threshold and value threshold.

6. The communication device according to one of the claims 1 to 5, wherein the communication device comprises circuitry (20) configured to execute the software application, wherein the software application is configured to obtain the energy and/or sustainability information from the first component via the software interface.

7. The communication device according to claim 6, wherein the software application is configured to obtain the energy and/or sustainability information from the first component via the software interface in response to a trigger, the trigger being based on one of a request by an infrastructure element of the communication network, a request by an application server, a request by another software application being executed on the communication device, and an internal logic of the software application.

8. The communication device according to one of the claims 6 or 7, wherein the software application is configured to provide a message to the first component based on the energy and/or sustainability information, the message comprising a command being suitable for triggering or setting at least one of a set phone functionality, a power saving mode setting, a Public Land Mobile Network, PLMN, selection, and a power preference indication.

9. The communication device according to one of the claims 8, wherein the software application is configured to provide a message to one of an infrastructure element of the communication network, an application server, and another application being executed on the communication device based on the energy and/or sustainability information.

10. The communication device according to one of the claims 1 to 9, wherein the second component is configured to determine the energy and/or sustainability information based on at least one of one or more device-side energy-related measurements, network-side energy and/or sustainability information received from an infrastructure element of the communication network, and stored energy and/or sustainability information contained in a Subscriber Identity Module, SIM, hosted by the communication device.

11. The communication device according to one of the claims 1 or 10, wherein the communication interface is suitable for communicating in a cellular communication network, the communication interface comprising a Terminal Equipment entity, TE, corresponding to the first component, a Mobile Termination entity, MT, corresponding to the second component, and a Terminal Application entity, TA, corresponding to a third component of the communication interface, with the TE communicating with the MT via the TA.

12. A method for a communication device, the method comprising:
obtaining (110), by a first component of a communication interface of the communication device, energy and/or sustainability information from a second component of the communication interface, the second component being configured to communicate within a communication network, the energy and/or sustainability information being related to a communication of the second component within the communication network, wherein the energy and/or sustainability information is information that is suitable for making decisions that impact the energy use and/or sustainability of the communication device or of the communication network being used by the communication device, and wherein the sustainability information is information on an environmental impact; and
providing (120), by the first component, a software interface for providing the energy and/or sustainability information to a software application being executed on the communication device,
wherein obtaining the energy and/or sustainability information from the second component comprises communicating with the second component via a third component (14) of the communication device, with the first component communicating with or via the third component of the communication device using Attention, AT, commands or using an Application Programming Interface, **API,** with the AT commands or Application Programming Interface including support for obtaining the energy and/or sustainability information from the second component via the third component,
wherein the AT commands or Application Programming Interface include support for obtaining said energy and/or sustainability information comprising at least one of energy and/or sustainability information related to a network service provided by an operator of the communication network, energy and/or sustainability information related to an energy usage or energy measurement locally at the communication device, and energy and/or sustainability information related to a sustainability level or energy consumption of a packet-domain aggregation of communication from the second component,
wherein the energy and/or sustainability information related to a network service provided by an operator of the communication network comprises one or more of information on a network-side energy budget being available for the communication device, information on at least one preferred energy or sustainability type criterion for cell selection, and information on an energy consumption or sustainability level for a specific service, and
wherein the energy and/or sustainability information related to an energy usage or energy measurement locally at the communication device is measured locally at the communication device.

13. Computer program with a program code for performing the method according to claim 12, when the computer program is run on a communication device comprising a communication interface with a first component and a second component.

## Patentansprüche

1. Eine Kommunikationsvorrichtung (100), umfassend:
eine Kommunikationsschnittstelle (10) mit einer ersten Komponente (12) und einer zweiten Komponente (16),
wobei die erste Komponente konfiguriert ist, um mit einer oder mehreren Softwareanwendungen zu kommunizieren, die auf der Kommunikationsvorrichtung ausgeführt werden,
wobei die zweite Komponente konfiguriert ist, um innerhalb eines Kommunikationsnetzwerks (200) zu kommunizieren,
wobei die erste Komponente konfiguriert ist, um Energie- und/oder Nachhaltigkeitsinformationen von der zweiten Komponente zu erhalten, wobei sich die Energie- und/oder Nachhaltigkeitsinformationen auf eine Kommunikation der zweiten Komponente innerhalb des Kommunikationsnetzwerks beziehen, wobei die Energie- und/oder Nachhaltigkeitsinformationen Informationen sind, die geeignet sind, um Entscheidungen zu treffen, die sich auf die Energienutzung und/oder Nachhaltigkeit der Kommunikationsvorrichtung oder des Kommunikationsnetzwerks auswirken, das von der Kommunikationsvorrichtung verwendet wird, und wobei die Nachhaltigkeitsinformationen Informationen über eine Umweltauswirkung sind,
wobei die erste Komponente konfiguriert ist, um eine Softwareschnittstelle zum Bereitstellen der Energie- und/oder Nachhaltigkeitsinformationen für eine Softwareanwendung (22) bereitzustellen, die auf der Kommunikationsvorrichtung ausgeführt wird,
wobei die erste Komponente konfiguriert ist, um mit der zweiten Komponente über eine dritte Komponente (14) der Kommunikationsvorrichtung zu kommunizieren, wobei die erste Komponente mit oder über die dritte Komponente der Kommunikationsvorrichtung unter Verwendung von Aufmerksamkeits-, AT-, Befehlen oder unter Verwendung einer Anwendungsprogrammierschnittstelle, API, kommuniziert, wobei die AT-Befehle oder die Anwendungsprogrammierschnittstelle eine Unterstützung zum Erhalten der Energie- und/oder Nachhaltigkeitsinformationen von der zweiten Komponente über die dritte Komponente beinhalten,
wobei die AT-Befehle oder die Anwendungsprogrammierschnittstelle eine Unterstützung zum Erhalten der Energie- und/oder Nachhaltigkeitsinformationen beinhalten, die mindestens eines von Energie- und/oder Nachhaltigkeitsinformationen in Bezug auf einen Netzwerkdienst, der von einem Betreiber des Kommunikationsnetzwerks bereitgestellt wird, Energie- und/oder Nachhaltigkeitsinformationen in Bezug auf einen Energieverbrauch oder eine Energiemessung lokal an der Kommunikationsvorrichtung und Energie- und/oder Nachhaltigkeitsinformationen in Bezug auf einen Nachhaltigkeitsgrad oder Energieverbrauch einer Paketdomänenaggregation der Kommunikation von der zweiten Komponente umfassen,
wobei die Energie- und/oder Nachhaltigkeitsinformationen in Bezug auf einen Netzwerkdienst, der von einem Betreiber des Kommunikationsnetzwerks bereitgestellt wird, eines oder mehrere von Informationen über ein netzwerkseitiges Energiebudget, das für die Kommunikationsvorrichtung verfügbar ist, Informationen über mindestens ein bevorzugtes Energie- oder Nachhaltigkeitstypkriterium für die Zellenauswahl und Informationen über einen Energieverbrauch oder einen Nachhaltigkeitsgrad für einen spezifischen Dienst umfassen, und
wobei die Energie- und/oder Nachhaltigkeitsinformationen in Bezug auf einen Energieverbrauch oder eine Energiemessung lokal an der Kommunikationsvorrichtung lokal an der Kommunikationsvorrichtung gemessen werden.

2. Die Kommunikationsvorrichtung nach Anspruch 1, wobei die Energie- und/oder Nachhaltigkeitsinformationen in Bezug auf einen Netzwerkdienst, der von einem Betreiber des Kommunikationsnetzwerks bereitgestellt wird, ferner eines oder mehrere von Energie- und/oder Nachhaltigkeitsinformationen in Bezug auf ein aktuell angeschlossenes Kommunikationsnetzwerk, Energie- und/oder Nachhaltigkeitsinformationen in Bezug auf eine aktuell angeschlossene Zelle und/oder verwendete Zugangstechnologie des Kommunikationsnetzwerks umfassen.

3. Die Kommunikationsvorrichtung nach einem der Ansprüche 1 oder 2, wobei die Energie- und/oder Nachhaltigkeitsinformationen in Bezug auf einen Energieverbrauch oder eine Energiemessung lokal an der Kommunikationsvorrichtung eines oder mehrere von Informationen über eine Energieklasse der Kommunikationsvorrichtung, Informationen über einen Energieverbrauch oder eine Energieintensität für ein gegebenes Frequenzband, Informationen über einen Energieverbrauch oder eine Energieintensität für eine gegebene Zugangstechnologie umfassen.

4. Die Kommunikationsvorrichtung nach einem der Ansprüche 1 bis 3, wobei die Energie- und/oder Nachhaltigkeitsinformationen in Bezug auf einen Energieverbrauch und/oder einen Energieverbrauch oder einen Nachhaltigkeitsgrad einer Paketdomänenaggregation der Kommunikation eines oder mehrere von Informationen über einen Energieverbrauch für eine spezifische Paketdateneinheitssitzung, Informationen über einen Energieverbrauch für einen spezifischen Dienstgüte-, QoS-, Fluss Informationen über einen Energieverbrauch für einen spezifische Slice oder Datennetzwerknamen, DNN, und Informationen über einen Energieverbrauch für eine spezifische Anwendung umfassen.

5. Die Kommunikationsvorrichtung nach einem der Ansprüche 1 bis 4, wobei die erste Komponente konfiguriert ist, um eine Anforderung für die Energie- und/oder Nachhaltigkeitsinformationen an die zweite Komponente bereitzustellen, wobei die Anforderung Informationen über mindestens einen von einem Zeitschwellenwert und einem Werteschwellenwert umfasst, und die zweite Komponente konfiguriert ist, um die Energie- und/oder Nachhaltigkeitsinformationen gemäß den Informationen über mindestens einen von dem Zeitschwellenwert und dem Werteschwellenwert bereitzustellen.

6. Die Kommunikationsvorrichtung nach einem der Ansprüche 1 bis 5, wobei die Kommunikationsvorrichtung eine Schaltungsanordnung (20) umfasst, die konfiguriert ist, um die Softwareanwendung auszuführen, wobei die Softwareanwendung konfiguriert ist, um die Energie- und/oder Nachhaltigkeitsinformationen von der ersten Komponente über die Softwareschnittstelle zu erhalten.

7. Die Kommunikationsvorrichtung nach Anspruch 6, wobei die Softwareanwendung konfiguriert ist, um die Energie- und/oder Nachhaltigkeitsinformationen von der ersten Komponente über die Softwareschnittstelle ansprechend auf einen Trigger zu erhalten, wobei der Trigger auf einem von einer Anforderung durch ein Infrastrukturelement des Kommunikationsnetzwerks, einer Anforderung durch einen Anwendungsserver, einer Anforderung durch eine andere Softwareanwendung, die auf der Kommunikationsvorrichtung ausgeführt wird, und einer internen Logik der Softwareanwendung basiert.

8. Die Kommunikationsvorrichtung nach einem der Ansprüche 6 oder 7, wobei die Softwareanwendung konfiguriert ist, um eine Nachricht an die erste Komponente basierend auf den Energie- und/oder Nachhaltigkeitsinformationen bereitzustellen, wobei die Nachricht einen Befehl umfasst, der zum Triggern oder Einstellen mindestens eines von einer eingestellten Telefonfunktionalität, einer Energiesparmoduseinstellung, einer Auswahl eines öffentlichen landgestützten Mobilfunknetzwerks, PLMN, und einer Energiepräferenzangabe geeignet ist.

9. Die Kommunikationsvorrichtung nach einem der Ansprüche 8, wobei die Softwareanwendung konfiguriert ist, um eine Nachricht an eines von einem Infrastrukturelement des Kommunikationsnetzwerks, einem Anwendungsserver und einer anderen Anwendung, die auf der Kommunikationsvorrichtung ausgeführt wird, basierend auf den Energie- und/oder Nachhaltigkeitsinformationen bereitzustellen.

10. Die Kommunikationsvorrichtung nach einem der Ansprüche 1 bis 9, wobei die zweite Komponente konfiguriert ist, um die Energie- und/oder Nachhaltigkeitsinformationen basierend auf mindestens einem von einer oder mehreren vorrichtungsseitigen energiebezogenen Messungen, netzwerkseitigen Energie- und/oder Nachhaltigkeitsinformationen, die von einem Infrastrukturelement des Kommunikationsnetzwerks empfangen werden, und gespeicherten Energie- und/oder Nachhaltigkeitsinformationen, die in einem Teilnehmeridentitätsmodul, SIM, enthalten sind, das von der Kommunikationsvorrichtung gehostet wird, zu bestimmen.

11. Die Kommunikationsvorrichtung nach einem der Ansprüche 1 oder 10, wobei die Kommunikationsschnittstelle zum Kommunizieren in einem zellularen Kommunikationsnetzwerk geeignet ist, wobei die Kommunikationsschnittstelle eine Endgeräteeinrichtungseinheit, TE, die der ersten Komponente entspricht, eine Mobilabschlusseinheit, MT, die der zweiten Komponente entspricht, und eine Endgeräteanwendungseinheit, TA, die einer dritten Komponente der Kommunikationsschnittstelle entspricht, umfasst, wobei die TE mit der MT über die TA kommuniziert.

12. Ein Verfahren für eine Kommunikationsvorrichtung, wobei das Verfahren umfasst:
Erhalten (110), durch eine erste Komponente einer Kommunikationsschnittstelle der Kommunikationsvorrichtung, von Energie- und/oder Nachhaltigkeitsinformationen von einer zweiten Komponente der Kommunikationsschnittstelle, wobei die zweite Komponente konfiguriert ist, um innerhalb eines Kommunikationsnetzwerks zu kommunizieren, wobei sich die Energie- und/oder Nachhaltigkeitsinformationen auf eine Kommunikation der zweiten Komponente innerhalb des Kommunikationsnetzwerks beziehen, wobei die Energie- und/oder Nachhaltigkeitsinformationen Informationen sind, die geeignet sind, um Entscheidungen zu treffen, die sich auf die Energienutzung und/oder Nachhaltigkeit der Kommunikationsvorrichtung oder des Kommunikationsnetzwerks auswirken, das von der Kommunikationsvorrichtung verwendet wird, und wobei die Nachhaltigkeitsinformationen Informationen über eine Umweltauswirkung sind; und
Bereitstellen (120), durch die erste Komponente, einer Softwareschnittstelle zum Bereitstellen der Energie- und/oder Nachhaltigkeitsinformationen für eine Softwareanwendung, die auf der Kommunikationsvorrichtung ausgeführt wird,
wobei das Erhalten der Energie- und/oder Nachhaltigkeitsinformationen von der zweiten Komponente ein Kommunizieren mit der zweiten Komponente über eine dritte Komponente (14) der Kommunikationsvorrichtung umfasst, wobei die erste Komponente mit oder über die dritte Komponente der Kommunikationsvorrichtung unter Verwendung von Aufmerksamkeits-, AT-, Befehlen oder unter Verwendung einer Anwendungsprogrammierschnittstelle, API, kommuniziert, wobei die AT-Befehle oder die Anwendungsprogrammierschnittstelle eine Unterstützung zum Erhalten der Energie- und/oder Nachhaltigkeitsinformationen von der zweiten Komponente über die dritte Komponente beinhalten,
wobei die AT-Befehle oder die Anwendungsprogrammierschnittstelle eine Unterstützung zum Erhalten der Energie- und/oder Nachhaltigkeitsinformationen beinhalten, die mindestens eines von Energie- und/oder Nachhaltigkeitsinformationen in Bezug auf einen Netzwerkdienst, der von einem Betreiber des Kommunikationsnetzwerks bereitgestellt wird, Energie- und/oder Nachhaltigkeitsinformationen in Bezug auf einen Energieverbrauch oder eine Energiemessung lokal an der Kommunikationsvorrichtung und Energie- und/oder Nachhaltigkeitsinformationen in Bezug auf einen Nachhaltigkeitsgrad oder Energieverbrauch einer Paketdomänenaggregation der Kommunikation von der zweiten Komponente umfassen,
wobei die Energie- und/oder Nachhaltigkeitsinformationen in Bezug auf einen Netzwerkdienst, der von einem Betreiber des Kommunikationsnetzwerks bereitgestellt wird, eines oder mehrere von Informationen über ein netzwerkseitiges Energiebudget, das für die Kommunikationsvorrichtung verfügbar ist, Informationen über mindestens ein bevorzugtes Energie- oder Nachhaltigkeitstypkriterium für die Zellenauswahl und Informationen über einen Energieverbrauch oder einen Nachhaltigkeitsgrad für einen spezifischen Dienst umfassen, und
wobei die Energie- und/oder Nachhaltigkeitsinformationen in Bezug auf einen Energieverbrauch oder eine Energiemessung lokal an der Kommunikationsvorrichtung lokal an der Kommunikationsvorrichtung gemessen werden.

13. Ein Computerprogramm mit einem Programmcode zum Durchführen des Verfahrens nach Anspruch 12, wenn das Computerprogramm auf einer Kommunikationsvorrichtung ausgeführt wird, die eine Kommunikationsschnittstelle mit einer ersten Komponente und einer zweiten Komponente umfasst.

## Revendications

1. Dispositif de communication (100) comprenant :
une interface de communication (10) avec un premier composant (12) et un second composant (16),
dans lequel le premier composant est configuré pour communiquer avec une ou plusieurs applications logicielles qui sont exécutées sur le dispositif de communication, dans lequel le second composant est configuré pour communiquer au sein d'un réseau de communication (200),
dans lequel le premier composant est configuré pour obtenir des informations d'énergie et/ou de durabilité à partir du second composant, les informations d'énergie et/ou de durabilité étant liées à une communication du second composant au sein du réseau de communication, dans lequel les informations d'énergie et/ou de durabilité sont des informations qui sont appropriées pour prendre des décisions qui influent sur l'utilisation d'énergie et/ou la durabilité du dispositif de communication ou du réseau de communication qui est utilisé par le dispositif de communication, et dans lequel les informations de durabilité sont des informations sur un impact environnemental,
dans lequel le premier composant est configuré pour fournir une interface logicielle pour fournir les informations d'énergie et/ou de durabilité à une application logicielle (22) qui est exécutée sur le dispositif de communication,
dans lequel le premier composant est configuré pour communiquer avec le second composant par l'intermédiaire d'un troisième composant (14) du dispositif de communication, avec le premier composant communiquant avec ou par l'intermédiaire du troisième composant du dispositif de communication en utilisant des commandes d'attention, AT, ou en utilisant une interface de programmation d'application, API, avec les commandes AT ou l'interface de programmation d'application incluant un support pour obtenir les informations d'énergie et/ou de durabilité à partir du second composant par l'intermédiaire du troisième composant,
dans lequel les commandes AT ou l'interface de programmation d'application incluent un support pour obtenir lesdites informations d'énergie et/ou de durabilité comprenant au moins l'une parmi des informations d'énergie et/ou de durabilité liées à un service de réseau fourni par un opérateur du réseau de communication, des informations d'énergie et/ou de durabilité liées à une utilisation d'énergie ou une mesure d'énergie localement au niveau du dispositif de communication, et des informations d'énergie et/ou de durabilité liées à un niveau de durabilité ou une consommation d'énergie d'une agrégation de domaine de paquets de communication à partir du second composant,
dans lequel les informations d'énergie et/ou de durabilité liées à un service de réseau fourni par un opérateur du réseau de communication comprennent une ou plusieurs parmi des informations sur un budget d'énergie côté réseau qui est disponible pour le dispositif de communication, des informations sur au moins un critère de type d'énergie ou de durabilité préféré pour une sélection de cellule, et des informations sur une consommation d'énergie ou un niveau de durabilité pour un service spécifique, et
dans lequel les informations d'énergie et/ou de durabilité liées à une utilisation d'énergie ou une mesure d'énergie localement au niveau du dispositif de communication sont mesurées localement au niveau du dispositif de communication.

2. Dispositif de communication selon la revendication 1, dans lequel les informations d'énergie et/ou de durabilité liées à un service de réseau fourni par un opérateur du réseau de communication comprennent en outre une ou plusieurs parmi des informations d'énergie et/ou de durabilité liées à un réseau de communication actuellement rattaché, des informations d'énergie et/ou de durabilité liées à une cellule actuellement rattachée et/ou une technologie d'accès utilisée du réseau de communication.

3. Dispositif de communication selon l'une des revendications 1 ou 2, dans lequel les informations d'énergie et/ou de durabilité liées à une utilisation d'énergie ou une mesure d'énergie localement au niveau du dispositif de communication comprennent une ou plusieurs parmi des informations sur une classe d'énergie du dispositif de communication, des informations sur une utilisation d'énergie ou une intensité pour une bande de fréquences donnée, des informations sur une utilisation d'énergie ou une intensité pour une technologie d'accès donnée.

4. Dispositif de communication selon l'une des revendications 1 à 3, dans lequel les informations d'énergie et/ou de durabilité liées à une consommation d'énergie et/ou une consommation d'énergie ou un niveau de durabilité d'une agrégation de domaine de paquets de communication comprennent une ou plusieurs parmi des informations sur une consommation d'énergie pour une session d'unité de données en paquets spécifique, des informations sur une consommation d'énergie pour un flux de qualité de service, QoS, spécifique, des informations sur une consommation d'énergie pour une tranche spécifique ou un nom de réseau de données, DNN, et des informations sur une consommation d'énergie pour une application spécifique.

5. Dispositif de communication selon l'une des revendications 1 à 4, dans lequel le premier composant est configuré pour fournir une demande pour les informations d'énergie et/ou de durabilité au second composant, la demande comprenant des informations sur au moins l'un parmi un seuil de temps et un seuil de valeur, et le second composant est configuré pour fournir les informations d'énergie et/ou de durabilité selon les informations sur au moins l'un parmi le seuil de temps et le seuil de valeur.

6. Dispositif de communication selon l'une des revendications 1 à 5, dans lequel le dispositif de communication comprend une circuiterie (20) configurée pour exécuter l'application logicielle, dans lequel l'application logicielle est configurée pour obtenir les informations d'énergie et/ou de durabilité à partir du premier composant par l'intermédiaire de l'interface logicielle.

7. Dispositif de communication selon la revendication 6, dans lequel l'application logicielle est configurée pour obtenir les informations d'énergie et/ou de durabilité à partir du premier composant par l'intermédiaire de l'interface logicielle en réponse à un déclencheur, le déclencheur étant basé sur l'une parmi une demande par un élément d'infrastructure du réseau de communication, une demande par un serveur d'application, une demande par une autre application logicielle qui est exécutée sur le dispositif de communication, et une logique interne de l'application logicielle.

8. Dispositif de communication selon l'une des revendications 6 ou 7, dans lequel l'application logicielle est configurée pour fournir un message au premier composant sur la base des informations d'énergie et/ou de durabilité, le message comprenant une commande qui est appropriée pour déclencher ou régler au moins l'un parmi une fonctionnalité de téléphone définie, un réglage de mode d'économie d'énergie, une sélection de réseau mobile terrestre public, PLMN, et une indication de préférence d'énergie.

9. Dispositif de communication selon l'une des revendications 8, dans lequel l'application logicielle est configurée pour fournir un message à l'un parmi un élément d'infrastructure du réseau de communication, un serveur d'application, et une autre application qui est exécutée sur le dispositif de communication sur la base des informations d'énergie et/ou de durabilité.

10. Dispositif de communication selon l'une des revendications 1 à 9, dans lequel le second composant est configuré pour déterminer les informations d'énergie et/ou de durabilité sur la base d'au moins l'une parmi une ou plusieurs mesures liées à l'énergie côté dispositif, des informations d'énergie et/ou de durabilité côté réseau reçues à partir d'un élément d'infrastructure du réseau de communication, et des informations d'énergie et/ou de durabilité stockées contenues dans un module d'identité d'abonné, SIM, hébergé par le dispositif de communication.

11. Dispositif de communication selon l'une des revendications 1 ou 10, dans lequel l'interface de communication est appropriée pour communiquer dans un réseau de communication cellulaire, l'interface de communication comprenant une entité d'équipement de terminal, TE, correspondant au premier composant, une entité de terminaison mobile, MT, correspondant au second composant, et une entité d'application de terminal, TA, correspondant à un troisième composant de l'interface de communication, la TE communiquant avec la MT par l'intermédiaire de la TA.

12. Procédé pour un dispositif de communication, le procédé comprenant le fait de :
obtenir (110), par un premier composant d'une interface de communication du dispositif de communication, des informations d'énergie et/ou de durabilité à partir d'un second composant de l'interface de communication, le second composant étant configuré pour communiquer au sein d'un réseau de communication, les informations d'énergie et/ou de durabilité étant liées à une communication du second composant au sein du réseau de communication, dans lequel les informations d'énergie et/ou de durabilité sont des informations qui sont appropriées pour prendre des décisions qui influent sur l'utilisation d'énergie et/ou la durabilité du dispositif de communication ou du réseau de communication qui est utilisé par le dispositif de communication, et dans lequel les informations de durabilité sont des informations sur un impact environnemental ; et
fournir (120), par le premier composant, une interface logicielle pour fournir les informations d'énergie et/ou de durabilité à une application logicielle qui est exécutée sur le dispositif de communication,
dans lequel le fait d'obtenir les informations d'énergie et/ou de durabilité à partir du second composant comprend le fait de communiquer avec le second composant par l'intermédiaire d'un troisième composant (14) du dispositif de communication, avec le premier composant communiquant avec ou par l'intermédiaire du troisième composant du dispositif de communication en utilisant des commandes d'attention, AT, ou en utilisant une interface de programmation d'application, API, avec les commandes AT ou l'interface de programmation d'application incluant un support pour obtenir les informations d'énergie et/ou de durabilité à partir du second composant par l'intermédiaire du troisième composant,
dans lequel les commandes AT ou l'interface de programmation d'application incluent un support pour obtenir lesdites informations d'énergie et/ou de durabilité comprenant au moins l'une parmi des informations d'énergie et/ou de durabilité liées à un service de réseau fourni par un opérateur du réseau de communication, des informations d'énergie et/ou de durabilité liées à une utilisation d'énergie ou une mesure d'énergie localement au niveau du dispositif de communication, et des informations d'énergie et/ou de durabilité liées à un niveau de durabilité ou une consommation d'énergie d'une agrégation de domaine de paquets de communication à partir du second composant,
dans lequel les informations d'énergie et/ou de durabilité liées à un service de réseau fourni par un opérateur du réseau de communication comprennent une ou plusieurs parmi des informations sur un budget d'énergie côté réseau qui est disponible pour le dispositif de communication, des informations sur au moins un critère de type d'énergie ou de durabilité préféré pour une sélection de cellule, et des informations sur une consommation d'énergie ou un niveau de durabilité pour un service spécifique, et
dans lequel les informations d'énergie et/ou de durabilité liées à une utilisation d'énergie ou une mesure d'énergie localement au niveau du dispositif de communication sont mesurées localement au niveau du dispositif de communication.

13. Programme informatique avec un code de programme pour réaliser le procédé selon la revendication 12, lorsque le programme informatique est exécuté sur un dispositif de communication comprenant une interface de communication avec un premier composant et un second composant.
